Europäisches Patentamt

European Patent Office

Office européen des brevets

(11) Veröffentlichungsnummer: **0 275 949**
**A2**

(12) **EUROPÄISCHE PATENTANMELDUNG**

(21) Anmeldenummer: **88100571.4**

(22) Anmeldetag: **16.01.88**

(51) Int. Cl.⁴: **B29C 33/58**

(30) Priorität: **20.01.87 DE 3701437**

(43) Veröffentlichungstag der Anmeldung:
**27.07.88 Patentblatt 88/30**

(84) Benannte Vertragsstaaten:
**AT BE CH DE ES FR GB IT LI NL SE**

(71) Anmelder: **Elastogran GmbH**
**Postfach 1140**
**D-2844 Lemförde(DE)**

(72) Erfinder: **Tintelnot, Dieter**
**Friedrichstrasse 2 f**
**D-2840 Diepholz(DE)**

(74) Vertreter: **Schweiss, Werner, Dr. et al**
**BASF Aktiengesellschaft Patentabteilung**
**Carl-Bosch-Strasse 38**
**D-6700 Ludwigshafen(DE)**

(54) Verfahren zur Herstellung von lackierfähigen Formteilen aus Polyisocyanat-Polyadditionsprodukten.

(57) Die Erfindung betrifft ein Verfahren zur Herstellung von lackierfähigen, kompakten oder zelligen Formteilen aus Polyisocyanat-Polyadditionsprodukten, vorzugsweise aus zelligen Polyurethanen, Polyharnstoffen oder Polyharnstoff-polyurethanen, wobei man eine gegebenenfalls in an sich bekannter Weise mit einem Formtrennmittel behandelte Formwerkzeuginnenfläche mit einem Polymerfilm, der zweckmäßigerweise in Wasser löslich ist, vorteilhafterweise in einer Menge von 10 bis 90 g/m², aus Homo-und Copolymerisaten des Vinylpyrrolidons, des Acrylamids, der Acrylsäure oder insbesondere aus Polyvinylalkohol und/oder Polyvinylacetat-Polyvinylalkohol-polymerisaten beschichtet, die fließfähige Reaktionsmischung zur Bildung des Polyisocyanat-Polyadditionsprodukts in das Formwerkzeug einbringt und aushärten läßt.

EP 0 275 949 A2

## Verfahren zur Herstellung von lackierfähigen Formteilen aus Polyisocyanat-Polyadditionsprodukten

Die Herstellung von kompakten oder zelligen Formteilen oder von Formteilen mit einem zelligen Kern und einer verdichteten Randzone durch Umsetzung von organischen, gegebenenfalls modifizierten Polyisocyanaten, höhermolekularen Verbindungen mit mindestens zwei reaktiven Wasserstoffatomen und gegebenenfalls Kettenverlängerungs- und/oder Vernetzungsmitteln in Gegenwart oder Abwesenheit von Treibmitteln, vorzugsweise in Gegenwart von physikalisch wirkenden Treibmitteln, Katalysatoren, Hilfsmitteln und/oder Zusatzstoffen in einem geschlossenen, gegebenenfalls temperierten Formwerkzeug ist seit langem bekannt und wird beispielsweise beschrieben in der DE-A-16 94 138 (GB 1 209 243), DE-C-19 55 891 (GB 1 321 679) und DE-B-17 69 886 (US 3 824 199).

Zusammenfassende Übersichten über derartige Formteile und Formschäumverfahren zu ihrer Herstellung wurden beispielsweise veröffentlicht im Kunststoff-Handbuch, Band 7, Polyurethane, 1. Auflage, 1966, herausgegeben von R. Vieweg und A. Höchtlen und 2. Auflage, 1983, herausgegeben von G. Oertel, Carl-Hanser Verlag, München und in "Integralschaumstoffe", herausgegeben von H. Piechota und H. Röhr, Carl Hanser Verlag, München 1975.

Obgleich die Herstellung von Formteilen aus Polyisocyanat-Polyadditionsprodukten eine außerordentliche technische Bedeutung erlangt hat, weisen die beschriebenen Verfahren technische Mängel auf. Nachteilig ist insbesondere, daß die Formteile an den Formwerkzeugen haften und daher schwer entformbar sind, was häufig zur Beschädigung des Formteils, insbesondere deren Oberfläche, führt. Zur Vermeidung dieses Nachteils werden in der Regel polierte metallische Formwerkzeuge verwendet und/oder die Formwerkzeuginnenflächen werden bei geöffnetem Formwerkzeug mit einem äußeren Trennmittel, beispielsweise einem Wachs oder Silikonöl, versehen. Der Trennmittelauftrag kann beispielsweise durch Bestreichen mit einem Pinsel oder einer Bürste oder vorzugsweise durch Einsprühen mit einer geeigneten Vorrichtung, wie z.B. einer Spritzpistole, erfolgen. Nach Abdunsten der gegebenenfalls zur Lösung der Trennmittel verwendeten Lösemittel sowie gegebenenfalls nach Einbringen von Einlegern zur Verstärkung des Formteiles wird die fließfähige Reaktionsmischung zur Bildung des Polyisocyanat-Polyadditionsproduktes in das offene Formwerkzeug eingefüllt und das Formwerkzeug danach verschlossen oder durch eine Angußstelle in das bereits geschlossene Formwerkzeug eingebracht, z.B. durch Eingießen oder Einspritzen unter Druck. Nach Aushärtung der Reaktionsmischung wird das Formwerkzeug geöffnet, das Formteil entformt und der Weiterverarbeitung zugeführt oder gelagert.

In den letzten Jahren wurden diese Formteile in stark wachsenden Anteilen lackiert. Beispielhaft genannt seien Außenteile für den Anbau an Kraftfahrzeuge, wie z.B. Spoiler, Schürzen, Radkastenverbreiterungen, Bumper u.a.

Bei der Lackierung machen sich jedoch geringste Fehlstellen, wie z.B. Bläschen oder Poren, in der Oberfläche des Formteils störend bemerkbar. Selbst kleinste Poren mit Durchmessern von 0,1 mm und darunter führen zu deutlich sichtbaren Störstellen im lackierten Formteil.

Zur Vermeidung oder Beseitigung derartiger Störstellen bedarf es einer aufwendigen Vorbehandlung der Formteile vor der Lackierung und/oder einer zusätzlichen kostspieligen Nachbearbeitung zwischen den einzelnen Lackierstufen, die möglicherweise mehrfach wiederholt werden müssen.

Die Aufgabe der vorliegenden Erfindung bestand darin, Störstellen bei der Herstellung von Formteilen aus Polyisocyanat-Polyadditionsprodukten in geschlossenen Formwerkzeugen ganz oder zumindest weitgehend zu beseitigen.

Diese Aufgabe konnte überraschenderweise durch Aufbringen einer filmbildenden Schicht aus Polymeren zwischen Formwerkzeuginnenfläche und formteiloberfläche gelöst werden.

Gegenstand der Erfindung ist somit ein Verfahren zur Herstellung von lackierfähigen, kompakten oder zelligen Formteilen, insbesondere Formteilen mit einem zelligen Kern und einer verdichteten Randzone, aus Polyisocyanat-Polyadditionsprodukten in einem geschlossenen Formwerkzeug, das dadurch gekennzeichnet ist, daß man die Formwerkzeuginnenfläche mit einem Polymerfilm beschichtet, die fließfähige Reaktionsmischung zur Bildung der Polyisocyanat-Polyadditionsprodukte in das Formwerkzeug einbringt und aushärten läßt.

Die Schicht aus der wirksamen Menge des Polymerfilms, der vorzugsweise wasserlöslich ist, kann direkt auf die Formwerkzeuginnenfläche, die aus beliebigen Formwerkzeugmaterialien, wie z.B. Epoxid-, ungesättigten Polyesterharzmassen oder vorzugsweise aus metallischen Werkstoffen, wie z.B. Aluminium, Gußeisen, Stahl oder Edelstahl, bestehen kann, aufgetragen werden.

Nach einer anderen Verfahrensvariante kann die Formwerkzeuginnenfläche zuvor in an sich bekannter Weise mit einem Formtrennmittel, wie z.B. einem Wachs, Silikonöl usw. beschichtet und danach auf dieses der Polymerfilm aufgebracht werden. Der Polymerfilm kann ganzflächig, d.h.

über die gesamte Innenfläche verteilt oder partiell, z.B. nur an den kritischen Stellen der Formwerkzeuginnenfläche, aufgetragen werden.

Falls die zur Ausbildung des Polymerfilms geeigneten Homo-und/oder Copolymerisate nicht in Substanz, sondern in Form von Lösungen verwendet werden, läßt man das Lösungsmittel zumindest teilweise, vorzugsweise jedoch vollständig verdunsten, bevor die gegebenenfalls schäumfähige Reaktionsmischung zur Bildung der Polyisocyanat-Polyadditionsprodukte in das Formwerkzeug eingebracht wird. Der Polymerfilm muß sich vor der nachfolgenden Lackierung des Formteils im wesentlichen restlos entfernen lassen, um keine Störungen beim Aufbau der Lackierung zu verursachen.

Zur Herstellung der Schicht zwischen Formwerkzeuginnenfläche und Formteil können verschiedenartige filmbildende Polymere verwendet werden. Da, wie bereits ausgeführt wurde, der Polymerfilm vor der Lackierung des Formteils im wesentlichen vollständig entfernt werden muß, werden zweckmäßigerweise leicht lösliche, insbesondere in Wasser gut löslich, polymere Stoffe angewandt. Als filmbildende Polymere kommen beispielsweise in Betracht: Homo-und/oder Copolymerisate mit einem Molekulargewicht von 3 000 bis 1 500 000, vorzugsweise von 20 000 bis 900 000 (Gewichtsmittel) des Vinylpyrrolidons, des Acrylamids oder der Acrylsäure. Beispielhaft genannt seien Polyvinylpyrrolidon, Copolymerisate aus Vinylpyrrolidon und z.B. Vinylacetat, Polyacrylamide, Copolymerisate aus Acrylamid und z.B. Vinylacetat oder/und kationischen Monomeren, wie z.B. Diethylaminoethylacrylat-sulfat, Homopolymerisate der Acrylsäure oder deren Salze und Copolymerisate aus Acrylsäure und/oder deren Salze mit z.B. Acrylnitril. Geeignet sind ferner Polyoxialkylen-polyole, vorzugsweise Polyoxiethylen-polyole, mit Molekulargewichten von 90 000 bis 1 500 000, vorzugsweise von 200 000 bis 1 300 000. Besonders bewährt haben sich jedoch und daher vorzugsweise verwendet werden Polyvinylalkohole und insbesondere Polyvinylacetat-Polyvinylalkohol-polymerisate, bei denen 80 bis 90 %, vorzugsweise 86 bis 89 % der Acetatgruppen des zugrundeliegenden Polyvinylacetats verseift sind bzw. die eine Verseifungszahl von 116 bis 214 mg KOH/g, vorzugsweise von 127 bis 157 mg KOH/g besitzen, mit Molekulargewichten von 15 000 bis 80 000, vorzugsweise von 22 000 bis 30 000 (Gewichtsmittel).

Unter der Verseifungszahl wird hierbei die Menge an Kaliumhydroxid in Milligramm verstanden, die zur Neutralisaton der aus einem Gramm Polyvinylacetat durch partielle Verseifung zu Polyvinylacetat-Polyvinylalkohol-polymerisat freigesetzten Säure verbraucht wird.

Die zur Ausbildung der Polymerfilme geeigneten Homo-und/oder Copolymerisate werden in einer Menge von 10 bis 90 $g/m^2$, vorzugsweise 20 bis 70 $g/m^2$ und insbesondere 30 bis 50 $g/m^2$, auf die Formwerkzeuginnenfläche aufgebracht. Je nach Art der verwendeten Polymerisate und deren Viskosität können diese lösungsmittelfrei oder in Form von Lösungen, zweckmäßigerweise in wäßrigen Lösungen oder in mit Wasser partiell oder vollständig mischbaren Lösungsmitteln, wie z.B. aliphatischen Ketonen, aliphatischen und cycloaliphatischen Ethern, beispielsweise Tetrahydrofuran, und vorzugsweise aliphatischen Alkoholen mit 1 bis 4 Kohlenstoffatomen im Alkylrest, beispielsweise Methanol, Ethanol, n-und iso-Propanol und n-und iso-Butanol eingesetzt werden. Zweckmäßigerweise als Lösungsmittel verwendet werden Gemische aus Wasser und Alkohol, vorzugsweise Ethanol im Gewichtsverhältnis 10:90 bis 90:10, vorzugsweise von 40:60 bis 60:40. Anwendungstechnisch bewährt haben sich besonders Lösungen, die, bezogen auf das Gesamtgewicht, 5 bis 40 Gew.%, vorzugsweise 5 bis 30 Gew.% und insbesondere 7 bis 20 Gew.% Polymerfilm bildende Homo-und/oder Copolymerisate enthalten und insbesondere 5 bis 40 gew.%ige Lösungen aus Polyviylalkohol und/oder Polyvinylacetat-Polyvinylalkohol-polymerisaten in einer Wasser-Alkoholmischung im Gewichtsverhältnis 10:90 bis 90:10.

Die filmbildende Homo-und/oder Copolymerisate oder Homo-und/oder Copolymerisatlösungen können nach bekannten Methoden, beispielsweise durch Bestreichen oder vorzugsweise Besprühen mit einer Spritzpistole oder anderen Einrichtungen auf die Innenfläche des Formwerkzeugs aufgebracht werden. Die Oberflächentemperatur des Formwerkzeugs bewegt sich dabei im Bereich von ungefähr 20 bis 100°C, vorzugsweise 20 bis 70°C und insbesondere 30 bis 60°C.

Wie bereits dargelegt wurde, läßt man bei Verwendung von Homo-und/oder Copolymerisatlösungen zur Polymerfilmbildung die Lösungsmittel verdunsten, bevor die Reaktionsmischung zur Bildung der Polyisocyanat-Polyadditionsprodukte in das Formwerkzeug eingebracht wird. Die erforderliche Abdunstzeit ist z.B. abhängig von der Art des verwendeten Lösemittels, der eingetragenen Polymerfilmmenge und von der eingestellten Formwerkzeugtemperatur und liegt erfahrungsgemäß zwischen 5 und 180 Sekunden, vorzugsweise zwischen 10 und 30 Sekunden.

Der weitere Verfahrensablauf zur Herstellung der kompakten oder insbesondere zelligen Formteile mit einer verdichteten Randzone erfolgt nach bekannten Methoden des Standes der Technik und wird beispielsweise beschrieben in der DE-A-16 94 138 (GB 1 209 243), DE-A-26 22 951 (US 4 218 543), EP-A-81 701 und der DE-A-25 34 247 (US 4 182 826). Die fließfähige, gegebenenfalls - schäumfähige Reaktionsmischung zur Bildung der Polyisocyanat-Polyadditionsprodukte wird hierzu in das Formwerkzeug ein gebracht und in dem offenen oder vorzugsweise geschlossenen Formwerkzeug bei Temperaturen zwischen 20°C und 100°C, vorzugsweise zwischen 20°C und 60°C, gegebenenfalls unter Verdichtung mit einem Verdichtungsgrad von 1,3 bis 8, vorzugsweise von 2 bis 6 aushärten gelassen.

Zur Herstellung der Formteile nach dem erfindungsgemäßen Verfahren aus Polyisocyanat-Polyadditionsprodukten können übliche Reaktionsmischungen Verwendung finden, die als wesentliche Aufbaukomponenten enthalten: organische Polyisocyanate, höhermolekulare Verbindungen mit mindestens zwei reaktiven Wasserstoffatomen, wie z.B. Polyether-polyole, Polyesterpolyole, hydroxylgruppenhaltige Polyacetale, Polycarbonate und Polycarbonsäureamid sowie Polyether-polyamine, gegebenenfalls Kettenverlängerungsmittel und/oder Vernetzer, wie z.B. niedermolekulare mehrwertige Alkohole und/oder Polyamine, Treibmittel, Katalysatoren, Hilfsmittel und Zusatzstoffe. Aus diesen Aufbaukomponenten werden vorzugsweise hergestellt Polyurethan-Integralschaumstoffe und zellige Polyurethan-, Polyharnstoff-oder Polyurethan-Polyharnstoff-Elastomere mit einer verdichteten Randzone.

Durch Erhöhung der Isocyanatkennzahl können Formteile hergestellt werden, die zusätzlich Isocyanuratgruppen gebunden enthalten.

Nach der Entformung wird der Polymerfilm, der nun überwiegend an der Formteiloberfläche haftet, mit Hilfe geeigneter Maßnahmen abgetrennt. Üblicherweise wird der Polymerfilm hierzu in Wasser gelöst und abgespült. Die Abtrennung kann z.B. in einem stehenden Bad, beispielsweise einem Wasserbad, durchgeführt werden und gegebenenfalls durch eine mechanische Bearbeitung des Formteils, z.B. mit Bürsten, beschleunigt werden. Vorzugsweise Anwendung finden jedoch Waschprozeße mit fließendem Wasser, wie z.B. das power-wash-Verfahren.

Nach Beendigung des Waschvorgangs werden die Formteile getrocknet und dem Lackierprozeß zugeführt.

Lackierfähige, zellige Formteile mit einer verdichteten Randzone aus Polyharnstoffen, Polyurethan-Polyharnstoffen und vorzugsweise Polyurethanen werden nach einer bevorzugt angewandten Ausführungsform nach folgendem Verfahren hergestellt. Die gegebenenfalls zuvor in an sich bekannter Weise mit einem Formtrennmittel behandelte Formwerkzeuginnenfläche wird mit 10 bis 90 g/m² eines wasserlöslichen Polymerfilms aus Polyvinylalkohol und/oder insbesondere einem Polyvinylacetat-Polyvinylalkohol-polymerisat, bei welchem 80 bis 90 % der Acetatgruppen des zugrundeliegenden Polyvinylacetats verseift sind und die ein Molekulargewicht von 15 000 bis 80 000 besitzen, beschichtet. Die als Lösungsmittel verwendete Wasser-Alkoholmischung läßt man danach verdunsten, falls das filmbildende Polymerisat in Lösung verwendet wurde. Anschließend wird die fließfähige schäumfähige Reaktionsmischung zur Bildung des Polyisocyanat-Polyadditionsproduktes in das Formwerkzeug eingebracht, dieses verschlossen und die Reaktionsmischung aushärten gelassen. Das entformte Formteil wird zur vollständigen Entfernung des Polymerfilms auf der Formteiloberfläche einer Wasserwäsche unterworfen und danach getrocknet.

Beispiel

a) Herstellung der wäßrig-alkoholischen Polyvinylalkohollösung:

Zu einer Mischung aus 8 kg Wasser und 2 kg Ethanol in einem heizbaren 20 Liter Rührkessel fügte man unter Rühren bei ungefähr 23°C 1,2 kg eines pulverförmigen Polyvinylalkohols der Verseifungszahl 140 mg KOH/g und der Viskosität von 4,2 m.Pa.s (gemessen als 4 gew.%ige wäßrige Lösung bei 20°C nach DIN 53 015).

Die entstandene Suspension wurde auf ungefähr 80°C erwärmt und bei dieser Temperatur ungefähr 15 Minuten gerührt bis sich der Polyvinylalkohol löste. Die auf Raumtemperatur abgekühlte Lösung, die eine Viskosität von ca. 45 m.Pas bei 20°C, gemessen nach DIN 51 550 und eine Dichte von 0,93 g/cm³ bei 20°C, gemessen nach DIN 51 757, besaß, war direkt im Sinne der Erfindung verwendungsfähig.

b) Vorbehandlung des Formwerkzeugs

In ein auf 48°C temperiertes Formwerkzeug aus Stahl, ausgestattet mit selbstverschließender Vorrichtung und Stangenanguß, wurde auf die Formwerkzeuginnenfläche mittels einer Sprühpistole ein handelsübliches Trennmittel (Codal® 710/1 der Firma Codal Chemic GmbH, D-8031 Maisach-Gerlinden) aufgetragen. Auf das abgelüftete Trennmittel wurde die unter (a) beschriebene filmbildende wäßrig-ethanolische Polyvinylalkohollösung in einer ungefähr 40 μ dicken Schicht (ungefähr 40 g/m²) aufgesprüht, danach der Einleger aus Stahlblech befestigt und das Formwerkzeug geschlossen.

c) Herstellung des Formkörpers aus Polyurethan-Integralschaumstoff

A-Komponente:

Mischung aus
57,522 Gew.-Teilen eines Polyether-polyols auf Basis Propylenoxid/Ethylenoxid mit der OH-Zahl 28 und einem Molekulargewicht von ca. 4000,
17,000 Gew.-Teilen eines Polyether-polyols auf Basis Trimethylolpropan, Propylenoxid und Ethylenoxid mit der OH-Zahl 34 und einem Molekulargewicht von ca. 4500,
6,000 Gew.-Teilen Butandiol-1,4,
0,360 Gew.-Teilen Ethylenglykol,
1,100 Gew.-Teilen Triethylendiamin (®Dabco 33 LV),
0,018 Gew.-Teilen Dibutylzinndilaurat,
5,000 Gew.-Teilen Schwarzpaste N und
13,000 Gew.-Teilen Trichlorfluormethan.

B-Komponente:

4,4'-Diphenylmethan-diisocyanat wird mit Dipropylenglykol umgesetzt zu einem NCO-gruppenhaltigen Präpolymeren mit einem NCO-Gehalt von 23 Gew.%.

Mit einer Hochdruckschäummaschine vom Typ Puromat®30 der Firma Elastogran Maschinenbau GmbH, Straßlach, wurde die A-Komponente mit einer Temperatur von 22°C und einem Verdüsungsdruck von 160 bar und die B-Komponente mit einer Temperatur von 22°C und einem Verdüsungsdruck von 180 bar im Mischungsverhältnis A-: B-Komponente von 100 : 40 Gew.-Teilen einem angebauten Mischkopf zugeführt, intensiv gemischt und über einen Stangenanguß in das geschlossene, vorbehandelte Formwerkzeug eingebracht. Die Reaktionsmischung wurde unter Verdichtung mit einem Verdichtungsgrad von 4,1 in 6 Minuten aushärten gelassen und danach das Formteil entformt.

Das frei aufschäumende Polyurethan-System besaß eine Startzeit von 16 Sekunden und eine Steigzeit von 40 Sekunden.

Der freigeschäumte Polyurethan-Schaumstoff wies ein Raumgewicht von 120 g/l auf.

Der auf dem erhaltenen Formteil haftende Polyvinylalkoholfilm wurde mittels einer Drucksprühvorrichtung mit ungefähr 40°C warmem Wasser abgewaschen, das Formteil getrocknet und direkt der Lackierung zugeführt.

**Ansprüche**

1. Verfahren zur Herstellung von lackierfähigen, kompakten oder zelligen Formteilen aus Polyisocyanat-Polyadditionsprodukten in einem geschlossenen Formwerkzeug, dadurch gekennzeichnet, daß man die Formwerkzeuginnenfläche mit einem Polymerfilm beschichtet, die fließfähige Reaktionsmischung zur Bildung des Polyisocyanat-Polyadditionsprodukts in das Formwerkzeug einbringt und aushärten läßt.

2. Verfahren nach Anspruch 1, dadurch gekennzeichnet, daß man die Formwerkzeuginnenfläche in an sich bekannter Weise mit einem Formtrennmittel behandelt, dieses mit einem Polymerfilm beschichtet, die fließfähige Reaktionsmischung zur Bildung des Polyisocyanat-Polyadditionsprodukts in das Formwerkzeug einbringt und aushärten läßt.

3. Verfahren nach den Ansprüchen 1 oder 2, dadurch gekennzeichnet, daß der Polymerfilm wasserlöslich ist.

4. Verfahren nach den Ansprüchen 1 oder 2, dadurch gekennzeichnet, daß der Polymerfilm im wesentlichen besteht aus Homo-und/oder Copolymerisaten des Vinylpyrrolidons, des Acrylamids oder der Acrylsäure sowie aus Polyvinylalkohol und/oder Polyvinylacetat-Polyvinylalkohol-polymerisaten.

5. Verfahren nach den Ansprüchen 1 oder 2, dadurch gekennzeichnet, daß der Polymerfilm besteht aus Polyvinylalkohol oder einem Polyvinylacetat-Polyvinylalkohol-polymerisat, bei dem 80 bis 90 % der Acetatgruppen des zugrundeliegenden Polyvinylacetats verseift sind bzw. mit einer Verseifungszahl von 116 bis 214 mg KOH/g.

6. Verfahren nach den Ansprüchen 1 und 2, dadurch gekennzeichnet, daß der Polymerfilm im wesentlichen besteht aus Homo-und/oder Copolymerisaten des Vinylpyrrolidons, des Acrylamids oder der Acrylsäure mit einem Molekulargewicht von 3 000 bis 1 500 000 oder aus Polyvinylalkohol-und/oder Polyvinylacetat-Polyvinylalkohol-polymerisaten mit einem Molekulargewicht von 15 000 bis 80 000 (Gewichtsmittel).

7. Verfahren nach den Ansprüchen 1 und 2, dadurch gekennzeichnet, daß der Polymerfilm aus Polyvinylalkohol und/oder Polyvinylacetat-Polyvinylalkohol-polymerisaten besteht und diese in Form einer 5 bis 40 gew.%igen Lösung in einer Wasser-Alkoholmischung im Gewichtsverhältnis 10 : 90 bis 90 : 10 Anwendung finden.

8. Verfahren nach den Ansprüchen 1 und 2, dadurch gekennzeichnet, daß der Polymerfilm auf die Formwerkzeuginnenfläche in einer Menge von 10 bis 90 g/m² aufgebracht wird.

9. Verfahren nach den Ansprüchen 1 und 2, dadurch gekennzeichnet, daß die Polyisocyanat-Polyadditionsprodukte aus Polyurethan-Integralschaumstoffen oder zelligen Polyurethan-, Polyharnstoff-oder Polyurethan-Polyharnstoff-Elastomeren mit einer verdichteten Randzone bestehen.

10. Verfahren zur Herstellung von lackierfähigen, zelligen Formteilen mit einer verdichteten Randzone aus Polyurethanen, Polyharnstoffen oder Polyurethan-Polyharnstoffen in einem geschlossenen Formwerkzeug, dadurch gekennzeichnet, daß man
die gegebenenfalls zuvor in an sich bekannter Weise mit einem Trennmittel behandelte Formwerkzeuginnenfläche mit 10 bis 90 g/m$^2$ eines wasserlöslichen Polymerfilms aus Polyvinylalkohol und/oder einem Polyvinylacetat-Polyvinylalkoholpolymerisat, bei welchem 80 bis 90 % der Acetatgruppen des zugrundeliegenden Polyvinylacetats verseift sind und die ein Molekulargewicht von 15 000 bis 80 000 besitzen, beschichtet,
gegebenenfalls die als Lösungsmittel verwendete Wasser-Alkoholmischung verdunsten läßt,
die fließfähige, schaumbildende Reaktionsmischung zur Bildung der Polyisocyanat-Polyadditionsprodukte in das Formwerkzeug einbringt und aushärten läßt und
das entformte Formteil einer Wasserwäsche unterwirft zur im wesentlichen vollständigen Entfernung des Polymerfilms.